# EUROPÄISCHE PATENTSCHRIFT

(11) **EP 2 687 645 B1**
(45) Veröffentlichungstag und Bekanntmachung des Hinweises auf die Patenterteilung: **23.11.2016**
(21) Anmeldenummer: 13177095.0
(22) Anmeldetag: 18.07.2013
(51) Int. Cl.: E04B 1/04, E04B 1/10, E04B 1/21, E04B 1/26

(54) **Verbindungselement von Bauteilen, insbesondere Tafeln und Trägern**
Joint element for components, in particular panels and supports
Elément de liaison de composants, notamment de tableaux et de supports

(30) Priorität: 19.07.2012 IT BZ20120028
(43) Veröffentlichungstag der Anmeldung: 22.01.2014
(73) Patentinhaber: Rotho Blaas srl GmbH, 39040 Cortaccia (IT)
(72) Erfinder: Polastri, Andrea, 38010 Dambel (IT); Dal Ri, Giovanni, 38012 Taio (IT); Angeli, Albino, 38020 Commezzadura (IT)
(74) Vertreter: Ausserer, Anton

(56) Entgegenhaltungen:
- EP-A1- 0 442 243
- DE-A1- 2 150 566

## Beschreibung

Die Erfindung bezieht sich auf ein Verbindungselement von Bauteilen, insbesondere von Tafeln und Trägern.

Es sind eine Vielzahl von Lösungen für die Verbindung von Bautafeln mit anderen Bautafeln oder anderen Elementen, zum Beispiel von Trägern oder die Verbindung von Trägern miteinander, bekannt. Zum Beispiel ist es möglich die Bauteile miteinander zu verkleben.

Eine weitere Lösung sieht Elemente vor, die vorab mit Bauteilen verbunden und in einen zweiten Schritt miteinander befestigt werden.

Beispielsweise aus der EP 2 243 887 sind Elemente bekannt, die von einander beabstandet auf einer Bauelementoberfläche befestigt werden. Diese leistenförmigen Elemente besitzen eine Trapezform und weisen auf den geneigten Seiten durchgehende Bohrlöcher auf. Diese Bohrlöcher sind derart ausgebildet, dass auch der Schraubkopf derart eingeführt wird, dass der Kopf vollständig aufgenommen wird. Auf diese Art und Weise ist der Schraubenkopf bündig mit der geneigten Oberfläche ausgerichtet. Oberhalb des Schraubenkopfes wird ein Deckel angeordnet, um eventuelle Schläge abzufangen. Dieses System ist sehr kompliziert und überdies sind kleinste Spiele gefordert. Zwischen dem Schraubenkopf und dem Deckel besteht viel Spiel, die belastete Schraube könnte gelockert werden und daher eine niedrige Festigkeit besitzen. Die gesamten Lasten sowohl auf Zug als auch auf Pressung konzentrieren sich auf dem Schraubenkopf und es besteht keine Wechselwirkung zwischen dem Verbindungselement und der Oberfläche.

Die EP 0 442 243 beschreibt eine Montage- und eine Demontagevorrichtung, die mindestens ein Schalldämpfungselement umfasst.

Das in der EP 0 442 243 beschriebene Schalldämpfungselement hat die Aufgabe, die Effekte einer Schallübertragung zu reduzieren. Das gelöste Problem ist die Herabsetzung der Schallübertragungsfähigkeit.

Das der beschriebenen Vorrichtung gestellte und von dieser gelöste Problem ist die Herabsetzung des Lärmes durch Schalldämmung.

In der DE 2150566 wird eine Vorrichtung zur Halterung von Fassadeelementen, wie zum Beispiel eine textile Zierfassade beschrieben. Diese Vorrichtung erleichtert die Montage.

Das Verbindungselement von Bauteilen gemäß der Erfindung setzt sich zum Ziel, eine stabile, schnell ausführbare Verbindung auszuführen, wo die Lasten auf einer Oberfläche verteilt sind.

Diese Aufgabe wird durch ein Verbindungselement zum Befestigen von Bauteilen an Holztafeln, gelöst, das auf einer Außenfläche eines Bauteiles gegenüberliegend angeordnet werden kann, wobei das Verbindungselement einen Körper aufweist, der eine Hülle umfasst und mindestens ein Füllmaterial innerhalb der Hülle enthält, wo das Füllmaterial elastischer ist als das Material, das die Hülle bildet, wobei die Hülle und das Füllmaterial mindestens eine durchgehendes und im Bauteil befestigbares Verankerungselement aufnehmen, wobei das Verbindungselement auf einer Holztafel durch eine Reihe von geneigten Verankerungselementen kreuzartig befestigt wird.

Der Körper des erfindungsgemäßen Elementes weist eine Hülle auf. Diese zum Beispiel aus Metall bestehende Hülle erfüllt, die Aufgabe die Stabilität des gesamten Elementes zu gewährleisten. Die Füllmasse kommt mit dem Verankerungselement, beispielsweise einer Schraube, in Berührung. Diese Berührung kann durch ein in der durchgehenden Bohrung im Füllmaterial bereitgestelltes Gewinde gegeben sein oder kann durch das Verankerungselement selbst gegeben sein, das durch die Füllmasse hindurch selbst eingeschraubt ist. Die Berührung kann durch die Adhäsion der Füllmasse mit den Verankerungselement im Falle gegeben sein, bei dem das Füllmaterial ein Bindungsmaterial ist. Das Bindungsmaterial kann zum Beispiel ein Schaum oder ein Harz sein, der/das in die Hülle nach erfolgter Verbindung eingebracht wird.

In einer bevorzugten Ausführungsform sind die Verankerungselemente schwalbenschwanzförmig positioniert, d.h. geneigt oder derart gekreuzt, dass eine größere Angriffsfläche gegeben ist.

Der Vorteil des erfindungsgemäßen Elementes besteht insbesondere in der Tatsache, dass der Aufbau, d.h. die Hülle dem gesamten Element Stabilität und Steifheit verleiht, während der mittige Bereich die Lasten aufnimmt. Der mittige Bereich mit der Füllmasse nimmt die Lasten auf, die sonst vom Kopf des Verankerungselementes aufgenommen werden.

Das erfindungsgemäße Element kann zum Beispiel für die Befestigung auf einer Holztafel verwendet werden. Das erfindungsgemäße Element wird durch eine Reihe von Verankerungselementen auf der Tafel befestigt. Die Befestigung kann schon im Werk erfolgen und muss nicht unbedingt an der Baustelle erfolgen. Die Verankerungselemente werden beispielsweise kreuzartig befestigt, wobei eine Schwalbenschwanzform gebildet wird. Diese Befestigungstypologie erlaubt eine ausgezeichnete Verteilung der Last sowohl innerhalb der Tafeln als auch innerhalb des erfindungsgemäßen Elementes. Diese Befestigungstypologie erlaubt die Ausführung eines symmetrischen Verbindungssystems gegenüber der mittigen Ebene der Tafel, wo die Kräfte durch die Tafel auf das Verbindungselement symmetrisch übertragen werden.

Das erfindungsgemäße Verbindungselement kann zum Beispiel eine Metallhülle, zum Beispiel aus Stahl aufweisen und als Füllmasse zum Beispiel einen Metalleinsatz oder einen Holzeinsatz, wechselweise ein Kunststoffharz oder einen Kunststoffschaum zum Beispiel aus Polyethylen mit hoher Dichte besitzen.

Der Holzeinsatz ist besonders geeignet, da die Verankerungselemente Holzschrauben sein können. In der Füllmasse kann schon eine Gewindebohrung vorgesehen sein, die eine bessere Einbringung des Verankerungselementes in die Masse erlaubt oder wechselweise kann das Verankerungselement zum Beispiel durch Schrauben angebracht werden, wobei im Material unmittelbar der Eingriff erfolgt.

Das erfindungsgemäße Verbindungselement kann überdies zum Beispiel Bohrungen zur Bereitstellung einer Angriffstelle für die Tafel aufweisen, an der das Verbindungselement befestigt ist. Es können überdies Mittel vorgesehen sein, um mehrere Verbindungselemente miteinander derart zu verbinden, dass eine stabile und sichere Verbindung zwischen mehreren Bauteilen gewährleistet wird.

Weitere Merkmale und Einzelheiten gehen aus den Patentansprüchen und aus den beigefügten Zeichnungen hervor. In der Zeichnung zeigen,

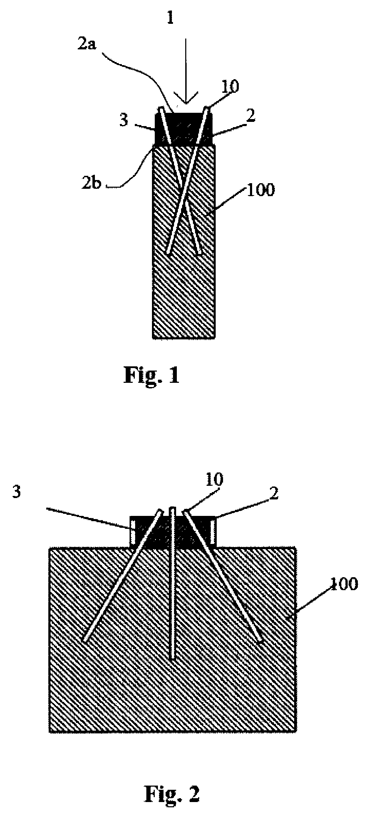

Figur 1 einen Stirnschnitt eines erfindungsgemäßen, mittels Verankerungselementen an einer Tafel befestigten Verbindungselementes,
Figur 2 einen Seitenschnitt, eines erfindungsgemäßen, durch Verankerungselemente an einer Tafel befestigten Verbindungselementes,

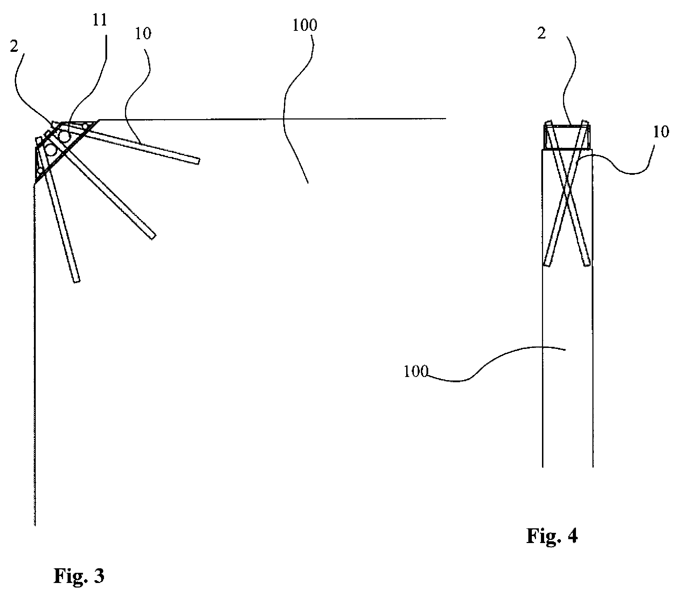

Figur 3 eine Seitenansicht, eines an einer Tafel befestigten Verbindungselementes,
Figur 4 einen Schnitt eines an einer Tafel befestigten Verbindungselementes,
Figur 5 eine Stange-Stange Verbindung unter geneigten Winkel und eine gerade Stange-Stange Verbindung,
Figur 6 einen Schnitt eines M-Profils, das unten mit einem an einer Tafel befestigten Platte geschlossen ist,
Figur 7 eine Seitenansicht von Figur 6,
Figur 8,9,10 und 11 eine Reihe von Schnitten von verschiedenen Verbindungselementen, und
Figur 12 eine Ansicht eines an einer Tafel mit einer Verbindungsplatte befestigten Verbindungselementes,
Figur 13 einen Schnitt der Figur 12,
Figur 14 eine Stange-Bauelement Verbindung,

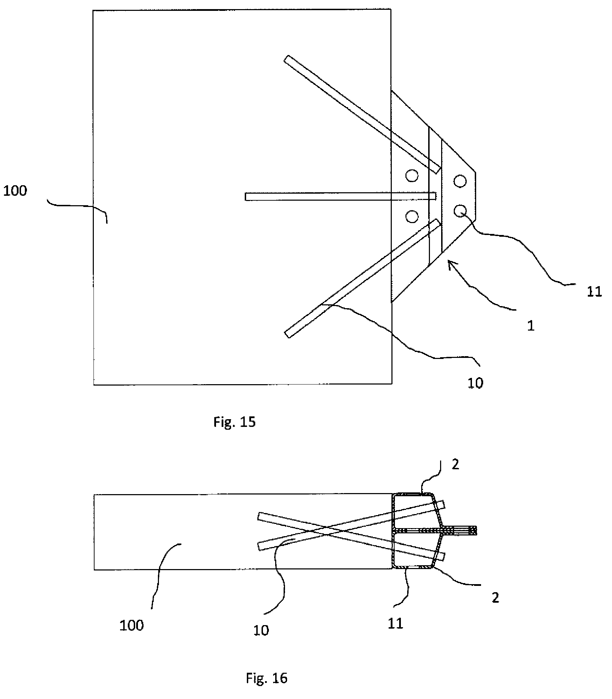

Figur 15 eine Ansicht eines Verbindungselementes,
Figur 16 einen Schnitt der Ansicht von Figur 15,
Figur 17 eine Ansicht eines Verbindungselementes,
Figur 18 einen Schnitt der Ansicht von Figur 17,
Figur 19 eine Ansicht eines an einer Tafel mit einer Verbindungsplatte befestigten Verbindungselementes,
Figur 20 einen Schnitt der Ansicht aus Figur 19,
Figur 21 zwei Verbindungselemente, mittels einer Platte mit Befestigungselementen verbunden, und
Figur 22 eine räumliche Struktur, die durch Verbindungselemente und Bauteile ausgeführt ist.

Ein Verbindungselement 1 besteht aus einem Körper. Dieser Körper umfasst eine Hülle 2 und enthält Füllmaterial 3 innerhalb der Hülle. Das Verbindungselement 1 ist derart ausgebildet, dass es ein durchgehendes Verankerungselement 10 aufnehmen kann.

Das Verbindungselement wird auf der Außenfläche des Bauteils , dieser gegenüberliegend, befestigt. Dieses durchgehende Verankerungselement 10 kann zum Beispiel eine Schraube sein. Das Verankerungselement 10 durchquert mindestens zwei Wände 2a,2b. Auf diese Art und Weise gibt die Hülle 2 der Verbindung Starrheit, während das Füllmaterial 3 der Verbindung eine elastische Festigkeit verleiht. Das Füllmaterial 3 erlaubt die Befestigung des Verankerungselementes 10 längs des gesamten Durchgangbereiches innerhalb des Verbindungselementes 1. Das Verbindungselement 10 wird ins Bauteil 100 eingebracht, das zum Beispiel eine Holztafel sein kann. Auf vorteilhafter Art und Weise sind das Verankerungselement oder die Verankerungselemente derart geneigt eingebracht, dass eine bessere Befestigung gewährleistet wird. Das Verankerungselement kann im erfindungsgemäßen Verbindungselement 1 in bereitgestellten Bohrungen eingebracht sein oder kann zum Beispiel es selbst di Bohrung ausführen. Die Bohrung, wo das Verankerungselement 10 eingebracht ist, kann zum Beispiel auch ein Gewinde aufweisen.

In einer weiteren Ausführungsform kann die Hülle leer sein und nur nach der Befestigung des Verankerungselementes oder der Verankerungselemente sowohl im Verbindungselement als auch in der Tafel 100 kann der Raum 3 beispielsweise mit einem Harz gefüllt werden.

In einer anderen Ausführungsform wird der Raum 3 zum Beispiel mit Holz oder einem Holteil gefüllt.

In einer weiteren Ausführungsform kann die Hülle leer sein und einen zweiten Körper beinhalten, der Lücken aufweist, die beispielsweise mit einem Harz nur nach der Befestigung des Verankerungselementes oder Verankerungselementen befüllt werden.

In einer weiteren Ausführungsform kann die Hülle leer sein und einen Körper beinhalten, der Lücken aufweist, innerhalb dem Kapseln angeordnet sind, die durch Verankerungselemente durchbohrt und durchquert werden.

Das Verbindungselement 1 kann Angriffstellen aufweisen, um eine einfachere Verstellung der Tafel 100 mit dem Verbindungselement 1 zu erlauben.

In einer weiteren Ausführungsform können Angriffstellen vorgesehen sein, die mittels eines Verbindungselementes wie zum Beispiel einer poly-orthogonalen Platte, die Befestigung an weiteren Verbindungselementen derart erlaubt, dass auf sichere Art und Weise eine Reihe von Tafeln 100 und/oder Bauelemente verbunden werden können.

Das Bauteil kann ein Holzbauteil und/oder eine Verbundteil aus mehren Schichten sein, das ein Mehrschichtteil, eine so genannte Sandwich Tafel bildet.

Das erfindungsgemäße Verbindungselement 1 kann beispielsweise mit einem schon bestehenden Außenelement wie zum Beispiel einem Element verbunden werden, das in Fundamente aus Beton oder Stahlträgern angeordnet ist, die schon beim Bau anwesend sind.

Das Verbindungselement kann auch zum Beispiel zwei Träger verbinden, wobei es auf dem Endteil des Trägers angeordnet ist. Auf diese Art und Weise kann das Verbindungselement eine Versenkverbindung ausführen, wobei darunter verstanden wird, dass keine Elemente vorhanden sein dürfen, die seitlich der Verbindung vorstehen. Dies erlaubt, dass die Beanspruchungen sich innerhalb des Schnittes des Trägers befinden. Auf diese Art und Weise können die Träger besser bemessen werden. Die Last ist überdies innerhalb des Schnittes der Träger angeordnet.

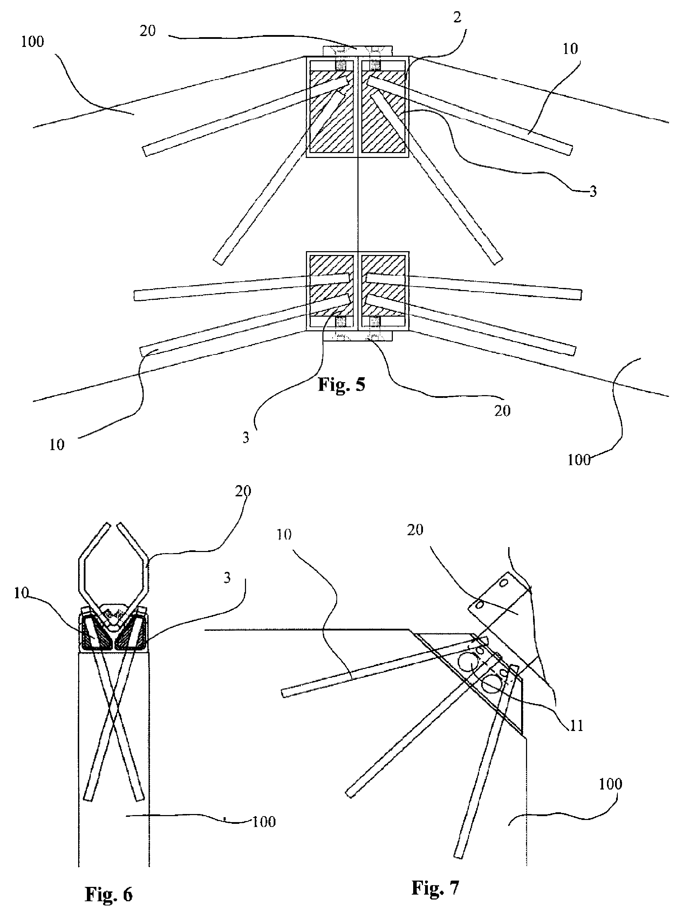

Wie in Figur 5 gezeigt, kann die Verbindung Träger-Träger ausgerichtet oder geneigt ausgeführt sein. In der Figur 5 ist ein Verbindungsmittel 20 vorhanden, das die beiden Verbindungselemente 1 verbindet, die mittels der Verankerungselemente 10 am Bauteil 100 befestigt sind.

In Figur 6 und 7 ist ein Verbindungselement 1 dargestellt, das an einem Bauteil 100 befestigt ist. Das Verbindungselement 1 ist durch ein unten geschlossenes M gebildet und an ihm sind Verbindungsmittel 20 verbunden, insbesondere eine gebogene Platte, derart, dass sie sich an die Form des Verbindungselementes 1 anpasst.

Das Verbindungselement erlaubt überdies andere Bauteile leichter zu befestigen. Zum Beispiel eine Decke kann einfacher mit der Verbindung zwischen zwei Trägern verbunden werden.

Das erfindungsgemäße Verbindungselement erlaubt überdies, die Verankerungselemente auf beliebige Art und Weise auszurichten, wobei dennoch eine optimale Befestigung sichergestellt ist.

Das erfindungsgemäße Verbindungselement kann verwendet werden, um Holztafeln oder aus mehreren Holzschichten zusammengesetzte Tafeln, Träger, Holzträger oder andere Bauteile zu verbinden, wie zum Beispiel Betontafeln, Stahlbeton, Mehrschichttafeln, Polymertafeln.

Das Verankerungselement 10 kann aus Holschrauben oder geharzten Stäben im Fall Verwendung des Verbindungselementes an Holzbauteilen oder dann aus Bewehrungsstäben bestehen, im Fall wo das Verbindungselement an Bauteilen aus bewehrten Beton verwendet wird.

Um die Hülle auf einfache und schnelle Art und Weise herzustellen kann diese zum Beispiel über eine Extrusion ausgeführt werden. Vom so erhaltenen Extrusionsprofil kann das erfindungsgemäße Verbindungselement nach der geforderten Breite abgeschnitten werden.

Die Hülle 2 kann auch durch Biegung eines Bleches zum Beispiel aus Metall gebildet werden.

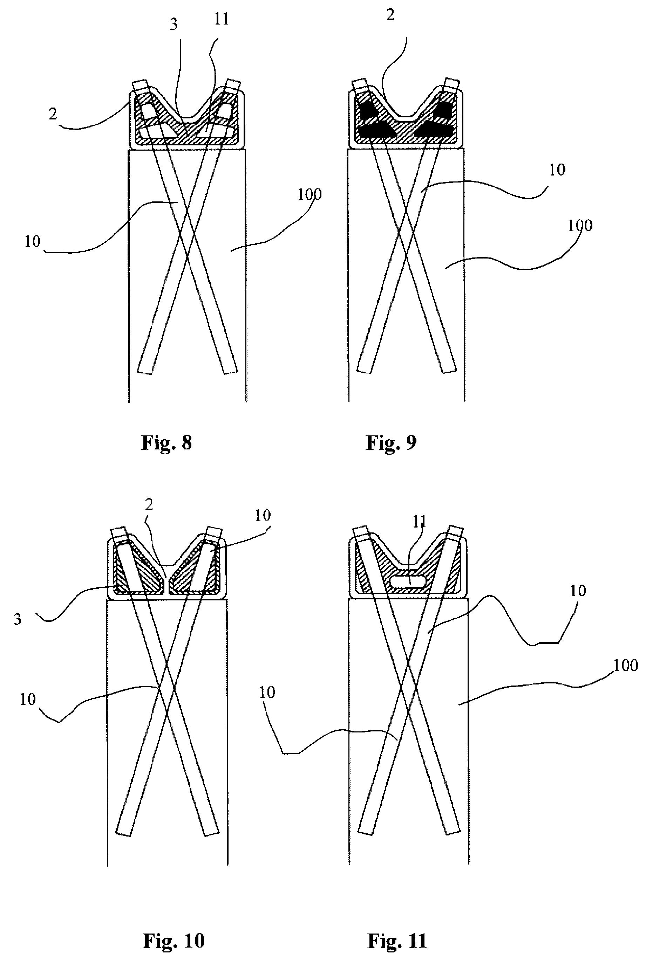

Figur 8,9,10 und 11 sind Ausführungsformen des erfindungsgemäßen Verbindungselementes dargestellt. Die Figur 9 zeigt ein Verbindungselement 1, das an einer Tafel 100 über Verankerungselemente 10 befestigt ist. Die Hülle 2 ist M- förmig mit geschlossenem Boden gebildet. Das Füllmaterial füllt nicht vollständig die Hülle 2. Es sind beispielsweise Öffnungen 11 vorhanden. Diese Öffnungen können zum Beispiel dazu dienen, um Mittel für die Verstellung des Verbindungselementes 1 mit der Tafel 100 zu verstellen oder sie können einfach um Material zu sparen erhalten sein, können jedoch auch zum Beispiel für die Spanabführung dienen, wobei der Span während der Einführung des Verankerungselementes 10 oder während der Herstellung des Gewindes erzeugt wird.

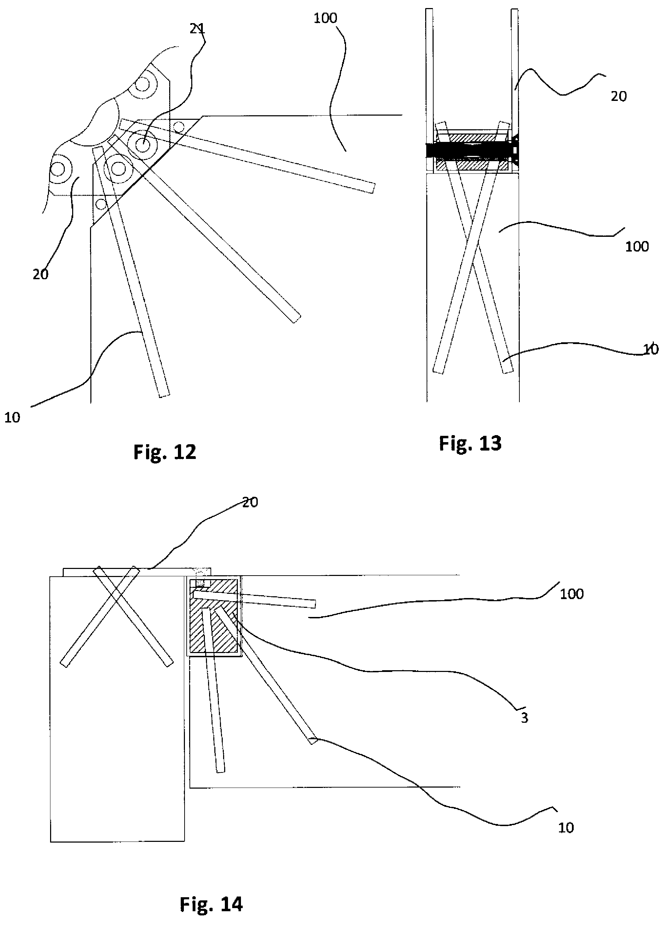

In Figur 12 und 13 ist ein Verbindungselement 1 dargestellt, das an Verbindungsmittel 20 über Befestigungselemente 21 befestigt ist. Diese Befestigungsmittel sind zum Beispiel ein Schraubbolzen, der beide Platten verschrauben kann, wobei nur innerhalb der Konstruktion die Bearbeitung möglich ist, wo somit eine Verbindung mit mechanischen Merkmalen von hoher Duktilität erhalten wird, da der Schraubbolzen 21 im mittigen Bereich gedreht und überdies es möglich ist, eventuelle Spiele zwischen Bohrung und Schraubbolzen zu beseitigen, wobei ein exzentrisches Rohr oder eine Harzkapsel verwendet werden können, die zwischen Schraubbolzen 21 und dem Füllmaterial 3 zwischengeschaltet ist.

Die Figur 14 zeigt eine Verbindung zwischen einem Träger mit einem Verbindungselement, das auf einem Bauteil 100 befestigt ist, und einem zweiten Bauteil.

In einer weiteren bevorzugten Ausführungsform kann das Füllmaterial 3 Holz oder ein Pressholz sein.

Figur 11 zeigt eine andere Ausführungsform des erfindungsgemäßen Verbindungselementes 1. Das Element gemäß dieser Ausführungsform ist in zwei verschiedenen Kammern unterteilt, wobei in jeder Kammer Verankerungselemente 10 angeordnet sind. Zwischen den beiden Kammern ist eine Aufnahme für Verbindungsmittel 20 zwischengeschaltet. Diese Aufnahme für ein Verbindungsmittel 10 wird über Befestigungsmittel 21 befestigt, wobei auch die beiden Teile des Verbindungselementes verspannt werden.

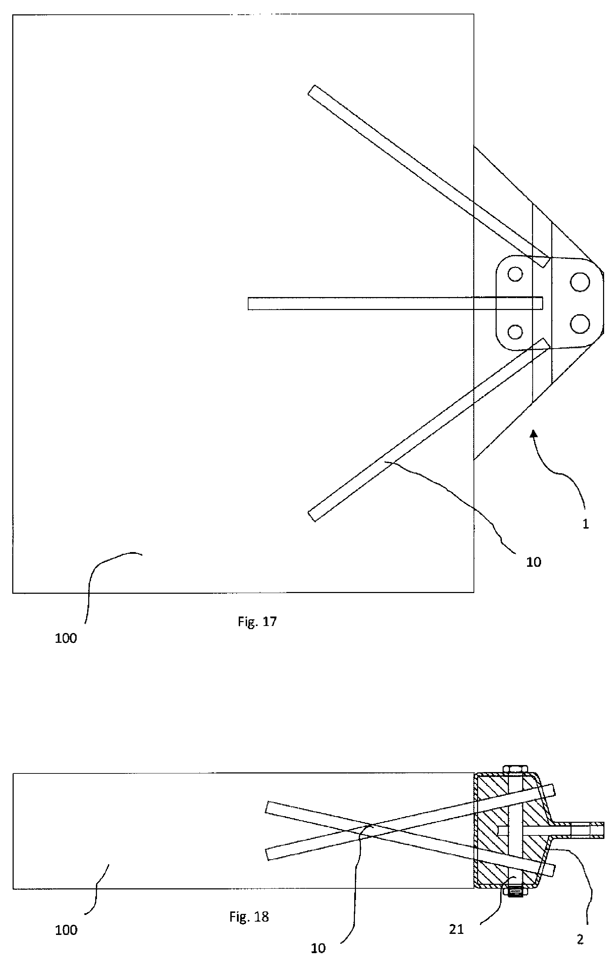

In Figur 17 und 18 ist eine weitere Ausführungsform dargestellt, mit der Aufnahme für die Verbindungsmittel 20, die in der Kammer des Verbindungselementes 1 angeordnet und durch Befestigungsmittel verspannt ist.

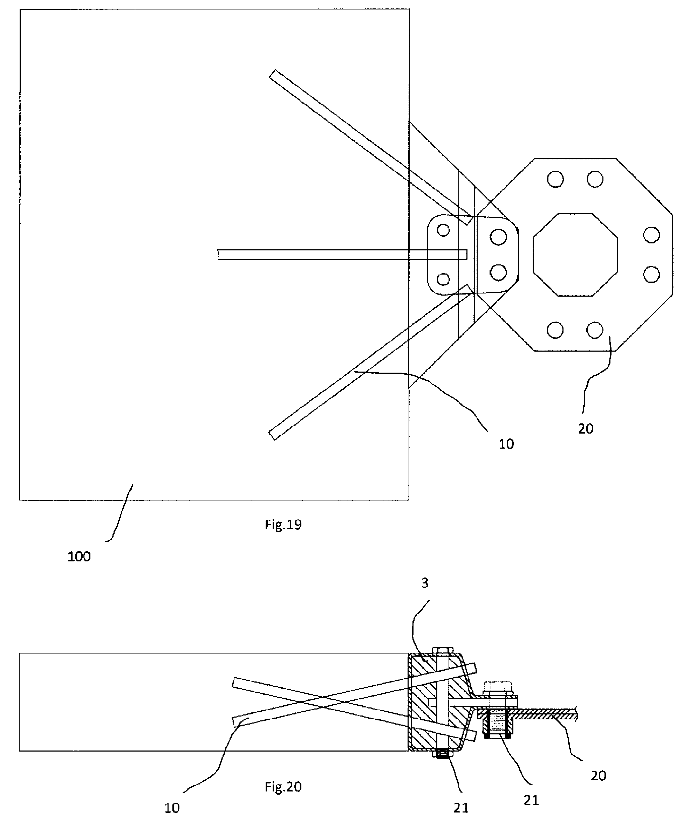

In der Figur 19 und 20 ist ein Element gemäß den Figuren 17 und 18 mit einem Verbindungsmittel 20 gezeigt. Dieses Verbindungsmittel ist an der Aufnahme befestigt. Auf diese Art und Weise ist die Verbindung stabiler und sicherer.

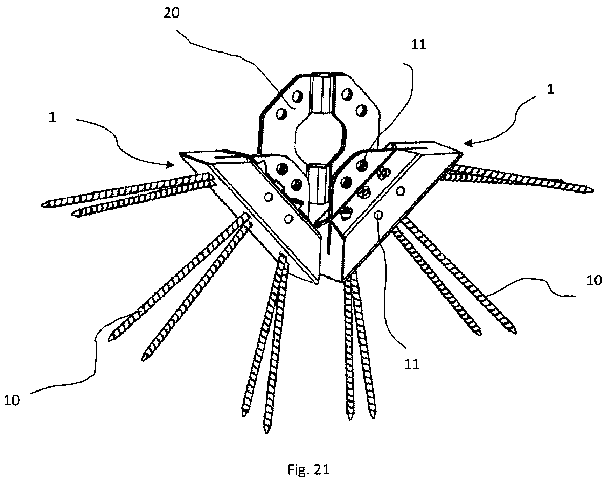

In Figur 21 ist eine Verbindung von zwei erfindungsgemäßen Verbindungselementen gezeigt, die miteinander über eine Platte und einer Reihe von Verankerungselemente 10 verbunden sind, die in nicht gezeigten Bauteilen befestigt sind.

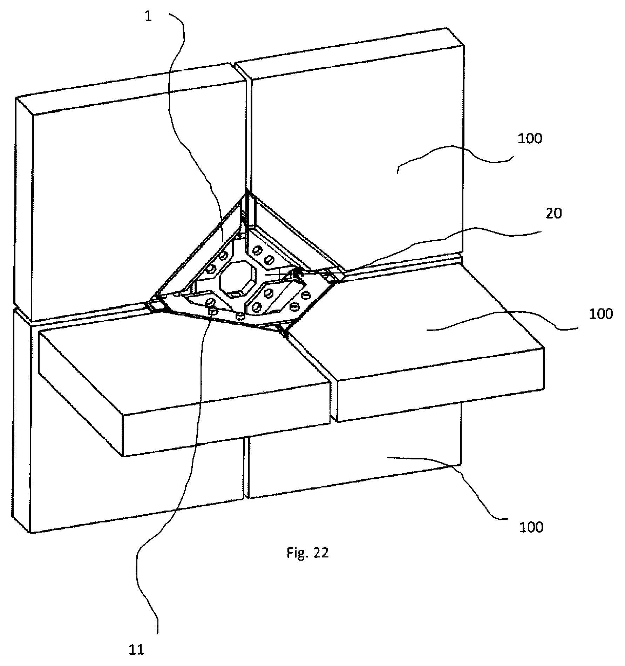

Figur 22 zeigt eine Raumstruktur die über das erfindungsgemäße Verbindungselement 1 ausgeführt ist, das eine Reihe von Bauteilen 100 verbindet, dessen Mitte eine Platte 20 ist. Aufstellung der Bezugsziffern.
- 1: Verbindungselement
- 2: Hülle
- 2a: oberer Teil der Hülle
- 2b: unterer Teil der Hülle
- 3: Füllmaterial
- 10: Verankerungselemente
- 11: Angriffsmittel
- 20: Verbindungsmittel
- 21: Befestigungsmittel
- 100: Bauteile

## Patentansprüche

1. Verbindungselement (1) zum Befestigen von Bauteilen (100) an Holztafeln, wobei das Verbindungselement (1) auf einer Außenfläche eines Bauteiles (100) gegenüberliegend angeordnet werden kann, wobei das Verbindungselement (1) einen Körper aufweist, der eine Hülle (2) umfasst und mindestens ein Füllmaterial (3) innerhalb der Hülle (2) enthält, wo das Füllmaterial (3) elastischer ist als das Material, das die Hülle (2) bildet, wobei die Hülle (2) und das Füllmaterial (3) mindestens ein durchgehendes und im Bauteil (100) befestigbares Verankerungselement (10) aufnehmen, **dadurch gekennzeichnet, dass** das Verbindungselement (1) auf einer Holztafel durch eine Reihe von geneigten Verankerungselementen kreuzartig befestigbar ist.

2. Verbindungselement nach dem vorstehenden Anspruch **dadurch gekennzeichnet, dass** das Bauteil (100) aus Holz zusammengesetzt ist.

3. Verbindungselement nach den vorstehenden Ansprüchen, **dadurch gekennzeichnet, dass** das Bauteil (100) mehrschichtig ist.

4. Verbindungselement nach Anspruch 1,2, oder 3, **dadurch gekennzeichnet, dass** das Verankerungselement (10) mindestens zwei Mal die Hülle (2) durchquert.

5. Verbindungselement nach Anspruch 1,2,3, oder 4, **dadurch gekennzeichnet, dass** das Verbindungselement (1) mit mindestens einem zweiten Verbindungselement (1) verbindbar ist.

6. Verbindungselement nach einem der vorstehenden Ansprüche, **dadurch gekennzeichnet, dass** das Verbindungselement (1) mindestens ein Angriffsmittel (11) umfasst.

7. Verbindungselement nach einem der vorstehenden Ansprüche, **dadurch gekennzeichnet, dass** die Hülle (2) einen geschlossenen Umfang aufweist.

8. Verbindungselement nach einem der vorstehenden Ansprüche, **dadurch gekennzeichnet, dass** das Füllmaterial (3) mindestens eine Bohrung für die Verankerungselemente (10) aufweist.

9. Verbindungselement nach einem der vorstehenden Ansprüche, **dadurch gekennzeichnet, dass** das Füllmaterial(3) mindestens eine Gewindebohrung für die Verankerungselemente (10)aufweist.

10. Verbindungselement nach einem der vorstehenden Ansprüche, **dadurch gekennzeichnet, dass** innerhalb der Hülle (2) mindestens eine weitere Hülle angeordnet ist, die das Füllmaterial (3) enthält.

11. Verbindungselement nach einem der vorstehenden Ansprüche, **dadurch gekennzeichnet, dass** das Füllmaterial (3)Aluminium ist.

12. Verbindungselement nach einem der Ansprüche von 1 bis 9, **dadurch gekennzeichnet, dass** das Füllmaterial (3) Harz ist.

13. Verbindungselement nach einem der Ansprüche von 1 bis 9, **dadurch gekennzeichnet, dass** das Füllmaterial (3) Holz oder ein Verbund auf der Basis von Holz ist.

14. Verbindungselement nach einem der vorstehenden Ansprüche, **dadurch gekennzeichnet, dass** die Hülle (2) mindestens zwei Füllmaterialien umfasst

## Claims

1. Connection element (1) for fixing building components (100) to wooden panels, the connection element (1) being able to be arranged opposite an outer surface of a building component (100), the connection element (1) having a body that comprises a case (2) and contains at least one filling material (3) within the case (2), where the filling material (3) is more elastic than the material forming the case (2), the case (2) and the filling material (3) being adapted to receive at least one through anchoring element (10) fixable into the building component (100) **characterised in that** the connection element (1) is fixable to a wooden panel in a cross arrangement by means of a series of anchoring elements.

2. Connection element according to previous claim, **characterised in that** the building component (100) is made of wood.

3. Connection element according to the previous claims, **characterised in that** the building component (100) has numerous layers.

4. Connection element according to claim 1, 2 or 3, **characterised in that** the anchoring element (10) crosses the case (2) at least twice.

5. Connection element according to claim 1, 2, 3 or 4, **characterised in that** said connection element (1) can be connected to at least a second connection element (1).

6. Connection element according to one of the previous claims **characterised in that** the element (1) comprises at least one grip means (11).

7. Connection element according to one of the previous claims **characterised in that** the case (2) has a closed perimeter.

8. Connection element according to one of the previous claims **characterised in that** the filling material (3) has at least one hole for the anchoring elements (10).

9. Connection element according to one of the previous claims **characterised in that** the filling material (3) has at least one threaded hole for the anchoring elements (10).

10. Connection element according to one of the previous claims **characterised in that** within the case (2) at least one further case is arranged containing the filling material (3).

11. Connection element according to one of the previous claims **characterised in that** said filling material (3) is aluminium.

12. Connection element according to one of claims 1 to 9 **characterised in that** the filling material (3) is resin.

13. Connection element according to one of claims 1 to 9 **characterised in that** the filling material (3) is wood or a join on the wood base.

14. Connection element according to one of the previous claims **characterised in that** the case (2) comprises at least two filling materials (3).

## Revendications

1. Élément de liaison (1) pour la fixation de composants de construction (100) à des panneaux de bois, l'élément de liaison (1) pouvant être placé à l'opposé d'une surface extérieure d'un composant de construction (100), l'élément de liaison (1) présentant un corps qui comporte une enveloppe (2) et contient au moins un matériau de remplissage (3) à l'intérieur de l'enveloppe (2), le matériau de remplissage (3) étant plus élastique que le matériau formant l'enveloppe (2), l'enveloppe (2) et le matériau de remplissage (3) étant aptes à recevoir au moins un élément d'ancrage (10) traversant et conçu pour être fixé dans le composant de construction (100), **caractérisé en ce que** l'élément de liaison (1) peut être fixé à un panneau de bois en croix au moyen d'une série d'éléments d'ancrage.

2. Élément de liaison selon l'une des revendication précédentes, **caractérisé en ce que** le composant de construction (100) est en bois.

3. Élément de liaison selon les revendications précédentes, **caractérisé en ce que** le composant de construction (100) est constitué de plusieurs couches.

4. Élément de liaison selon la revendication 1, 2 ou 3, **caractérisé en ce que** l'élément d'ancrage (10) traverse l'enveloppe (2) au moins deux fois.

5. Élément de liaison selon la revendication 1, 2, 3 ou 4, caractérisé en ce quel ledit élément de liaison (1) peut être relié à au moins un deuxième élément de liaison (1).

6. Élément de liaison selon l'une des revendications précédentes, **caractérisé en ce que** l'élément (1) comprend au moins un moyen de saisie (11).

7. Élément de liaison selon l'une des revendications précédentes, **caractérisé en ce que** l'élément (2) a un périmètre fermé.

8. Élément de liaison selon l'une des revendications précédentes, **caractérisé en ce que** le matériau de remplissage (3) comporte au moins un trou pour les éléments d'ancrage (10).

9. Élément de liaison selon l'une des revendications précédentes, **caractérisé en ce que** le matériau de remplissage (3) comporte au moins un trou fileté pour les éléments d'ancrage (10).

10. Élément de liaison selon l'une des revendications précédentes, **caractérisé en ce qu'**au moins une autre enveloppe contenant le matériau de remplissage (3) est placée à l'intérieur de l'enveloppe (2).

11. Élément de liaison selon l'une des revendications précédentes, **caractérisé en ce que** ledit matériau de remplissage (3) est de l'aluminium.

12. Élément de liaison selon l'une des revendications de 1 à 9, **caractérisé en ce que** le matériau de remplissage (3) est de la résine.

13. Élément de liaison selon l'une des revendications de 1 à 9, **caractérisé en ce que** le matériau de remplissage (3) est du bois ou un assemblage sur une base de bois.

14. Élément de liaison selon l'une des revendications précédentes, **caractérisé en ce que** l'enveloppe (2) comprend au moins deux matériaux de remplissage (3).
